# EUROPEAN PATENT APPLICATION

(11) **EP 4 564 960 A1**
(43) Date of publication of application: **04.06.2025**
(21) Application number: 23845404.5
(22) Date of filing: 19.07.2023
(51) Int. Cl.: H04W 72/04

(54) **SMALL DATA TRANSMISSION METHOD, TERMINAL, NETWORK DEVICE, APPARATUS, AND STORAGE MEDIUM**

(30) Priority: 29.07.2022 CN 202210908486
(71) Applicant: Datang Mobile Communications Equipment Co., Ltd., Beijing 100085 (CN)
(72) Inventor: SHI, Jie, Beijing 100085 (CN); FU, Jing, Beijing 100085 (CN)
(74) Representative: Studio Torta S.p.A.
(86) International application number: PCT/CN2023/108145
(87) International publication number: WO 2024/022193

(57) **Abstract**

The present disclosure provides a small data transmission method, a terminal, a network device, an apparatus, and a storage medium. The method comprises: receiving a first configuration message sent by the network device, wherein the first configuration message is used for configuring a first configuration resource, and the first configuration resource is used for sending related information of an MT-SDT process; and when determining to trigger the MT-SDT process, sending an RRC recovery request message to the network device on the first configuration resource.

## Description

### CROSS-REFERENCES TO RELATED APPLICATIONS

The present application claims priority to Chinese patent application No. 202210908486.3 filed on July 29, 2022, entitled "Small Data Transmission Method, Terminal, Network Device, Apparatus, and Storage Medium", which is hereby incorporated by reference in its entirety.

### FIELD

The present application relates to the field of communications, and in particular, to methods and apparatuses for small data transmission, a terminal, a network device, and a storage medium.

### BACKGROUND

For user equipment (UE) in an inactive state, in case that there is uplink small data generated and needs to be transmitted to the network side, the UE initiates a mobile original small data transmission (MO-SDT) procedure.

For the MO-SDT procedure, the network side configures configured grant (CG) resources or random access channel (RACH) resources for the transmission of uplink small data.

For mobile terminate small data transmission (MT-SDT), the network side needs to transmit the downlink small data to the UE, transmit a paging message and indicate the MT-SDT procedure; after obtaining the paging message, the UE initiates a radio resource control (RRC) resume request message for the MT-SDT procedure, to notify the network side that UE prepares to receive downlink small data.

For the MT-SDT procedure, there is a problem of resource waste when performing the MT-SDT procedure using the resources corresponding to the MO-SDT procedure configured by the network device.

### BRIEF SUMMARY

Embodiments of the present application provide methods and apparatuses for small data transmission, a terminal, a network device, and a storage medium.

Embodiments of the present application provide a method for small data transmission, including:
receiving a first configuration message transmitted from a network device, where the first configuration message is used to configure a first configuration resource, and the first configuration resource is used to transmit associated information of a mobile terminate small data transmission (MT-SDT) procedure; and
transmitting a radio resource control (RRC) resume request message to the network device on the first configuration resource in case that it is determined that the MT-SDT procedure is triggered.

In an embodiment, the first configuration resource includes a configured grant (CG) resource, or a random access resource.

In an embodiment, the first configuration resource is the same as part of resources for transmitting associated information of a mobile original small data transmission (MO-SDT) procedure configured by the network device; or,
the first configuration message includes first indication information, where the first indication information is used to indicate to reuse part of resources for transmitting associated information of a mobile original small data transmission (MO-SDT) procedure configured by the network device; or,
the first configuration resource is a shared resource, where the shared resource is shared with resources for transmitting associated information of a mobile original small data transmission (MO-SDT) procedure configured by the network device.

In an embodiment, in case that the first configuration resource is the shared resource, transmitting the RRC resume request message to the network device on the first configuration resource includes:
transmitting the RRC resume request message and a first indicator to the network device, where the first indicator is used to indicate that the first configuration resource is being used for the MT-SDT procedure.

In an embodiment, the first configuration message carries index information of part of configured grant (CG) resources for transmitting associated information of a mobile original small data transmission (MO-SDT) procedure configured by the network device, or proportion information of part of random access resources for transmitting associated information of a mobile original small data transmission (MO-SDT) procedure configured by the network device.

In an embodiment, the first configuration resource is the CG resource, and the first configuration message includes at least one or more of the following: time domain information of the CG resource; frequency domain information of the CG resource; a first payload size threshold of the CG resource; or a first channel threshold of the CG resource.

In an embodiment, a time domain location of the CG resource is determined based on a paging occasion and time offset information in the time domain information, and/or a cycle in the time domain information of the CG resource meets a given relationship with a paging cycle corresponding to a terminal in an inactive state.

In an embodiment, the first payload size threshold is smaller than a second payload size threshold of a CG resource for transmitting associated information of a mobile original small data transmission (MO-SDT) procedure configured by the network device; or,
the first payload size threshold is a percentage value of a second payload size threshold of a CG resource for transmitting associated information of a mobile original small data transmission (MO-SDT) procedure configured by the network device; or,
the first payload size threshold is independent from a second payload size threshold of a CG resource for transmitting associated information of a mobile original small data transmission (MO-SDT) procedure configured by the network device.

In an embodiment, the first channel threshold is equal to a second channel threshold of a CG resource for transmitting associated information of a mobile original small data transmission (MO-SDT) procedure configured by the network device.

In an embodiment, a timing advance timer for the CG resource is the same as a timing advance timer for a CG resource for transmitting associated information of a mobile original small data transmission (MO-SDT) procedure configured by the network device, and a channel change threshold of the CG resource is the same as a channel change threshold of the CG resource for transmitting associated information of a mobile original small data transmission (MO-SDT) procedure configured by the network device; or,
the CG resource and a CG resource for transmitting associated information of a mobile original small data transmission (MO-SDT) procedure configured by the network device share a timing advance timer and a channel change threshold;
the timing advance timer and the channel change threshold are used to determine validity of a timing advance.

In an embodiment, the first configuration resource is the random access resource, and the first configuration message includes at least one or more of the following: a resource for random access channel occasion; a scrambling code resource for random access channel occasion; priority information between the MT-SDT procedure and a mobile original small data transmission (MO-SDT) procedure; or priority information between the MT-SDT procedure and other features supported by network.

In an embodiment, before transmitting the RRC resume request message, the method further includes:
determining that there is a mobile original non-small data transmission, and prioritizing to initiate a random access procedure for the mobile original non-small data transmission; or,
determining that there is a mobile original small data transmission (MO-SDT), and prioritizing to perform an MO-SDT procedure.

Embodiments of the present application further provides a method for small data transmission, including:
transmitting a first configuration message to a terminal, where the first configuration message is used to configure a first configuration resource, and the first configuration resource is used to receive associated information of a mobile terminate small data transmission (MT-SDT) procedure; and
receiving a radio resource control (RRC) resume request message transmitted from the terminal on the first configuration resource.

In an embodiment, the first configuration resource includes a configured grant (CG) resource, or a random access resource.

In an embodiment, the first configuration resource is the same as part of resources for transmitting associated information of a mobile original small data transmission (MO-SDT) procedure configured by a network device; or,
the first configuration message includes first indication information, where the first indication information is used to indicate to reuse part of resources for transmitting associated information of a mobile original small data transmission (MO-SDT) procedure configured by a network device; or,
the first configuration resource is a shared resource, where the shared resource is shared with resources for transmitting associated information of a mobile original small data transmission (MO-SDT) procedure configured by a network device.

In an embodiment, in case that the first configuration resource is the shared resource, the method further includes:
receiving a first indicator transmitted from the terminal, where the first indicator is used to indicate that the first configuration resource is being used for the MT-SDT procedure.

In an embodiment, the first configuration message carries index information of part of configured grant (CG) resources for transmitting associated information of a mobile original small data transmission (MO-SDT) procedure configured by the network device, or proportion information of part of random access resources for transmitting associated information of a mobile original small data transmission (MO-SDT) procedure configured by the network device.

In an embodiment, the first configuration resource is the CG resource, and the first configuration message includes at least one or more of the following: time domain information of the CG resource; frequency domain information of the CG resource; a first payload size threshold of the CG resource; or a first channel threshold of the CG resource.

In an embodiment, a time domain location of the CG resource is determined based on a paging occasion and time offset information in the time domain information, and/or a cycle in the time domain information of the CG resource meets a given relationship with a paging cycle corresponding to a terminal in an inactive state.

In an embodiment, the first payload size threshold is smaller than a second payload size threshold of a CG resource for transmitting associated information of a mobile original small data transmission (MO-SDT) procedure configured by the network device; or,
the first payload size threshold is a percentage value of a second payload size threshold of a CG resource for transmitting associated information of a mobile original small data transmission (MO-SDT) procedure configured by the network device; or,
the first payload size threshold is independent from a second payload size threshold of a CG resource for transmitting associated information of a mobile original small data transmission (MO-SDT) procedure configured by the network device.

In an embodiment, the first channel threshold is equal to a second channel threshold of a CG resource for transmitting associated information of a mobile original small data transmission (MO-SDT) procedure configured by the network device.

In an embodiment, a timing advance timer for the CG resource is the same as a timing advance timer for a CG resource for transmitting associated information of a mobile original small data transmission (MO-SDT) procedure configured by the network device, and a channel change threshold of the CG resource is the same as a channel change threshold of the CG resource for transmitting associated information of a mobile original small data transmission (MO-SDT) procedure configured by the network device; or,
the CG resource and a CG resource for transmitting associated information of a mobile original small data transmission (MO-SDT) procedure configured by the network device share a timing advance timer and a channel change threshold;
the timing advance timer and the channel change threshold are used to determine validity of a timing advance.

In an embodiment, the first configuration resource is the random access resource, and the first configuration message includes at least one or more of the following: a resource for random access channel occasion; a scrambling code resource for random access channel occasion; priority information between the MT-SDT procedure and a mobile original small data transmission (MO-SDT) procedure; or priority information between the MT-SDT procedure and other features supported by network.

Embodiments of the present application further provides a terminal, including a memory, a transceiver, and a processor, where the memory is used for storing a computer program; the transceiver is used for receiving and transmitting data under control of the processor; and the processor is used for reading the computer program in the memory and performing the method for small data transmission performed by the terminal described above.

Embodiments of the present application further provides a network device, including a memory, a transceiver, and a processor, where the memory is used for storing a computer program; the transceiver is used for receiving and transmitting data under control of the processor; and the processor is used for reading the computer program in the memory and performing the method for small data transmission performed by the network device described above.

Embodiments of the present application further provides an apparatus for small data transmission, including:
a receiving unit, used for receiving a first configuration message transmitted from a network device, where the first configuration message is used to configure a first configuration resource, and the first configuration resource is used to transmit associated information of a mobile terminate small data transmission (MT-SDT) procedure; and
a transmitting unit, used for transmitting a radio resource control (RRC) resume request message to the network device on the first configuration resource in case that it is determined that the MT-SDT procedure is triggered.

In an embodiment, the first configuration resource includes a configured grant (CG) resource, or a random access resource.

In an embodiment, the first configuration resource is the same as part of resources for transmitting associated information of a mobile original small data transmission (MO-SDT) procedure configured by the network device; or,
the first configuration message includes first indication information, where the first indication information is used to indicate to reuse part of resources for transmitting associated information of a mobile original small data transmission (MO-SDT) procedure configured by the network device; or,
the first configuration resource is a shared resource, where the shared resource is shared with resources for transmitting associated information of a mobile original small data transmission (MO-SDT) procedure configured by the network device.

In an embodiment, in case that the first configuration resource is the shared resource, the transmitting unit is further used for:
transmitting the RRC resume request message and a first indicator to the network device, where the first indicator is used to indicate that the first configuration resource is being used for the MT-SDT procedure.

In an embodiment, the first configuration message carries index information of part of configured grant (CG) resources for transmitting associated information of a mobile original small data transmission (MO-SDT) procedure configured by the network device, or proportion information of part of random access resources for transmitting associated information of a mobile original small data transmission (MO-SDT) procedure configured by the network device.

In an embodiment, the first configuration resource is the CG resource, and the first configuration message includes at least one or more of the following: time domain information of the CG resource; frequency domain information of the CG resource; a first payload size threshold of the CG resource; or a first channel threshold of the CG resource.

In an embodiment, a time domain location of the CG resource is determined based on paging occasion and time offset information in the time domain information, or a cycle in the time domain information of the CG resource meets a given relationship with a paging cycle corresponding to a terminal in an inactive state.

In an embodiment, the first payload size threshold is smaller than a second payload size threshold of a CG resource for transmitting associated information of a mobile original small data transmission (MO-SDT) procedure configured by the network device; or,
the first payload size threshold is a percentage value of a second payload size threshold of a CG resource for transmitting associated information of a mobile original small data transmission (MO-SDT) procedure configured by the network device; or,
the first payload size threshold is independent from a second payload size threshold of a CG resource for transmitting associated information of a mobile original small data transmission (MO-SDT) procedure configured by the network device.

In an embodiment, the first channel threshold is equal to a second channel threshold of a CG resource for transmitting associated information of a mobile original small data transmission (MO-SDT) procedure configured by the network device.

In an embodiment, a timing advance timer for the CG resource is the same as a timing advance timer for a CG resource for transmitting associated information of a mobile original small data transmission (MO-SDT) procedure configured by the network device, and a channel change threshold of the CG resource is the same as a channel change threshold of the CG resource for transmitting associated information of a mobile original small data transmission (MO-SDT) procedure configured by the network device; or,
the CG resource and a CG resource for transmitting associated information of a mobile original small data transmission (MO-SDT) procedure configured by the network device share a timing advance timer and a channel change threshold;
the timing advance timer and the channel change threshold are used to determine validity of a timing advance.

In an embodiment, the first configuration resource is the random access resource, and the first configuration message includes at least one or more of the following: a resource for random access channel occasion; a scrambling code resource for random access channel occasion; priority information between the MT-SDT procedure and a mobile original small data transmission (MO-SDT) procedure; or priority information between the MT-SDT procedure and other features supported by network.

In an embodiment, the apparatus further includes a determining module, used for:
before transmitting the RRC resume request message:
determining that there is a mobile original non-small data transmission, and prioritizing to initiate a random access procedure for the mobile original non-small data transmission; or,
determining that there is a mobile original small data transmission (MO-SDT), and prioritizing to perform an MO-SDT procedure.

Embodiments of the present application further provides an apparatus for small data transmission, including:
a transmitting unit, used for transmitting a first configuration message to a terminal, where the first configuration message is used to configure a first configuration resource, and the first configuration resource is used to receive associated information of a mobile terminate small data transmission (MT-SDT) procedure; and
a first receiving unit, used for receiving a radio resource control (RRC) resume request message transmitted from the terminal on the first configuration resource in case that it is determined that the MT-SDT procedure is triggered.

In an embodiment, the first configuration resource includes a configured grant (CG) resource, or a random access resource.

In an embodiment, the first configuration resource is the same as part of resources for transmitting associated information of a mobile original small data transmission (MO-SDT) procedure configured by the network device; or,
the first configuration message includes first indication information, where the first indication information is used to indicate to reuse part of resources for transmitting associated information of a mobile original small data transmission (MO-SDT) procedure configured by the network device; or,
the first configuration resource is a shared resource, where the shared resource is shared with resources for transmitting associated information of a mobile original small data transmission (MO-SDT) procedure configured by the network device.

In an embodiment, in case that the first configuration resource is the shared resource, the apparatus further includes:
a second receiving unit, used for receiving a first indicator transmitted from the terminal, where the first indicator is used to indicate that the first configuration resource is being used for the MT-SDT procedure.

In an embodiment, the first configuration message carries index information of part of configured grant (CG) resources for transmitting associated information of a mobile original small data transmission (MO-SDT) procedure configured by the network device, or proportion information of part of random access resources for transmitting associated information of a mobile original small data transmission (MO-SDT) procedure configured by the network device.

In an embodiment, the first configuration resource is the CG resource, and the first configuration message includes at least one or more of the following: time domain information of the CG resource; frequency domain information of the CG resource; a first payload size threshold of the CG resource; or a first channel threshold of the CG resource.

In an embodiment, a time domain location of the CG resource is determined based on paging occasion and time offset information in the time domain information, or a cycle in the time domain information of the CG resource meets a given relationship with a paging cycle corresponding to a terminal in an inactive state.

In an embodiment, the first payload size threshold is smaller than a second payload size threshold of a CG resource for transmitting associated information of a mobile original small data transmission (MO-SDT) procedure configured by the network device; or,
the first payload size threshold is a percentage value of a second payload size threshold of a CG resource for transmitting associated information of a mobile original small data transmission (MO-SDT) procedure configured by the network device; or,
the first payload size threshold is independent from a second payload size threshold of a CG resource for transmitting associated information of a mobile original small data transmission (MO-SDT) procedure configured by the network device.

In an embodiment, the first channel threshold is equal to a second channel threshold of a CG resource for transmitting associated information of a mobile original small data transmission (MO-SDT) procedure configured by the network device.

In an embodiment, a timing advance timer for the CG resource is the same as a timing advance timer for a CG resource for transmitting associated information of a mobile original small data transmission (MO-SDT) procedure configured by the network device, and a channel change threshold of the CG resource is the same as a channel change threshold of the CG resource for transmitting associated information of a mobile original small data transmission (MO-SDT) procedure configured by the network device; or,
the CG resource and a CG resource for transmitting associated information of a mobile original small data transmission (MO-SDT) procedure configured by the network device share a timing advance timer and a channel change threshold;
the timing advance timer and the channel change threshold are used to determine validity of a timing advance.

In an embodiment, the first configuration resource is the random access resource, and the first configuration message includes at least one or more of the following: a resource for random access channel occasion; a scrambling code resource for random access channel occasion; priority information between the MT-SDT procedure and a mobile original small data transmission (MO-SDT) procedure; or priority information between the MT-SDT procedure and other features supported by network.

Embodiments of the present application further provides a processor-readable storage medium storing a computer program, where the computer program is used to cause a processor to perform any of the methods for small data transmission described above.

Embodiments of the present application further provides a computer-readable storage medium storing a computer program, where the computer program is used to cause a computer to perform any of the methods for small data transmission described above.

Embodiments of the present application further provides a communication device storing a computer program, where the computer program is used to cause a communication device to perform any of the methods for small data transmission described above.

Embodiments of the present application further provides a chip product storing a computer program, where the computer program is used to cause a chip product to perform any of the methods for small data transmission described above.

In the methods and apparatuses for small data transmission, the terminal, the network device, and the storage medium provided in the embodiments of the present application, the terminal determines the first configuration resource for transmitting associated information of the MT-SDT procedure based on the first configuration message transmitted from the network device. When it is determined that the MT-SDT procedure is triggered at the network side, the terminal transmits an RRC resume request message to the network device on the first configuration resource, which clarifies the resource configuration method for MT-SDT procedure, and reduces resource waste.

### BRIEF DESCRIPTION OF THE DRAWINGS

To illustrate the solutions in the embodiments of the present application or the related art more clearly, the drawings used in the description of the embodiments or the related art are briefly described below. The drawings in the following description are only some embodiments of the present application, and other drawings may be obtained based on these drawings without any creative effort for those skilled in the art.
FIG. 1 is a schematic flowchart of a four-step random access provided by the related art;
FIG. 2 is a schematic flowchart of a two-step random access provided by the related art;
FIG. 3 is a schematic flowchart of a mobile terminate small data transmission (MT-SDT) procedure according to an embodiment of the present application;
FIG. 4 is a first schematic flowchart of a method for small data transmission according to an embodiment of the present application;
FIG. 5 is second schematic flowchart of a method for small data transmission according to an embodiment of the present application;
FIG. 6 is a schematic diagram of a time domain location of a configured grant (CG) resource according to an embodiment of the present application;
FIG. 7 is a schematic diagram of a random access resource according to an embodiment of the present application;
FIG. 8 is a schematic structural diagram of a terminal according to an embodiment of the present application;
FIG. 9 is a schematic structural diagram of a network device according to an embodiment of the present application;
FIG. 10 is a first schematic structural diagram of an apparatus for small data transmission according to an embodiment of the present application; and
FIG. 11 is a second schematic structural diagram of an apparatus for small data transmission according to an embodiment of the present application.

### DETAILED DESCRIPTION

To better describe the solutions in the embodiments of the present application, related knowledge is introduced below.

### 1. mobile original small data transmission (MO-SDT) procedure

Small data transmission may include: small data transmission based on configured grant (CG) resource, small data transmission based on two-step random access (RA), and small data transmission based on four-step random access. User equipment (UE) in an inactive state transmits a small data packet on a pre-configured uplink resource (CG-SDT resource), or transmits a small data packet on MsgA (a two-step random access is triggered) or Msg.3 (a four-step random access is triggered). The small data packet includes a data radio bearer (DRB) data packet and a signaling radio bearer (SRB) data packet. The MO-SDT procedure is as follows based on the type of resource used for MO-SDT transmission.

### (1) CG-SDT

The CG resources used for the MO-SDT procedure are dedicated resources configured by the network side for certain UE. Based on the received information of CG resources for the MO-SDT, the network side may determine the identification information of the UE, and determine that this is a UE-triggered small data transmission procedure based on CG resource. Based on the CG-SDT procedure, the network side synchronously initializes the associated bearer. CG resources are periodic resources, and there is limitation of a payload size threshold for the CG resources. Only when the size of the uplink data packet does not exceed this payload size threshold, may the CG-SDT procedure be used for transmission.

The mobile original CG-SDT introduces a timing advance (TA) timer. When the TA timer expires, the TA becomes invalid and the CG resources cannot be used. The validity of TA is guaranteed by running a TA timer, or by ensuring that the channel quality change is below a threshold. That is, when the amplitude of channel change (reflecting the distance between UE and network device) is less than a certain threshold, it indicates that the movement distance between UE and base station is not large, and the TA value previously maintained is valid.

### (2) Four-step RA-SDT

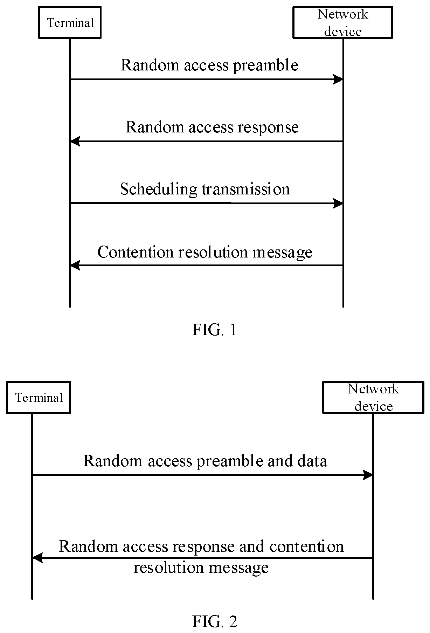

FIG. 1 is a schematic flowchart of a four-step random access provided by the related art. As shown in FIG. 1, the four-step random access (four-step RA) includes the following steps.

Step 1: UE transmits a message (Msg) 1 to a network side device.

The UE selects a random access preamble and a physical random access channel (PRACH) resource, and uses the PRACH resource to transmit the selected random access preamble to the network device.

Step 2: the network device transmits a Msg2 to the UE.

The network device receives the random access preamble transmitted from the UE and transmits a random access response to the UE.

Step 3: the UE transmits a Msg3 to the network device.

The UE transmits uplink transmission on the uplink (UL) grant indicated in Msg2, and the content of uplink transmission varies for different random accesses in Msg3. For the small data transmission (SDT), the content includes SDT data and an RRC resume request message.

Step 4: the network device transmits a Msg4 to the UE.

The network device transmits a contention resolution message to the UE, and the UE determines whether the random access is successful based on Msg4.

### (3) Two-Step RA-SDT

FIG. 2 is a schematic flowchart of a two-step random access provided by the related art. As shown in FIG. 2, a two-step random access (two-step RA) procedure is derived based on the four-step RA. The two-step RA includes the following steps.

Step 1: UE transmits a MsgA to a network device.

MsgA refers to preamble transmission on the PRACH and data transmission (including payload size) on a physical uplink shared channel (PUSCH), which is equivalent to Msg1 and Msg3 in the four-step RACH.

Step 2: the network device transmits a MsgB to the UE.

MsgB is a random access response and contention resolution message, which is equivalent to Msg2 and/or Msg4 in the four-step RACH.

In the above procedures, in case that the UE receives a response message from the network device after transmitting an RRC resume request message and an SDT data packet in the CG resource, the MsgA in the two-step random access, or the Msg3 in the four-step random access, the SDT access is successful, and the UE may proceed with data transmission and reception in an inactive state.

In the two-step random access and four-step random access procedures, CG resource and preamble resource configuration corresponding to the MO-SDT procedure are introduced for the MO-SDT procedure. The network pre-configures these resources, and in case that the UE wants to trigger the MO-SDT procedure, the UE transmits a preamble on the corresponding resource. The network side learns that this is the MO-SDT procedure and initializes the configuration of SDT-associated bearers.

For the MO-SDT procedure, the network side allocates dedicated random access resources or scrambling code resources in the random access preamble. These resources may be dedicated to the MO-SDT procedure or shared with other features supported by network such as slicing, reduced capability (RedCap), and coverage enhancement.

A corresponding list of network supported features and feature combinations are clarified in the current standard, and the network side configures the corresponding random access resources or scrambling code resources for the MO-SDT procedure based on this list. In case that the UE initiates a MO-SDT request, the UE selects appropriate random access resources or scrambling code resources to trigger the MO-SDT procedure.

### 2. mobile terminate small data transmission (MT-SDT) procedure

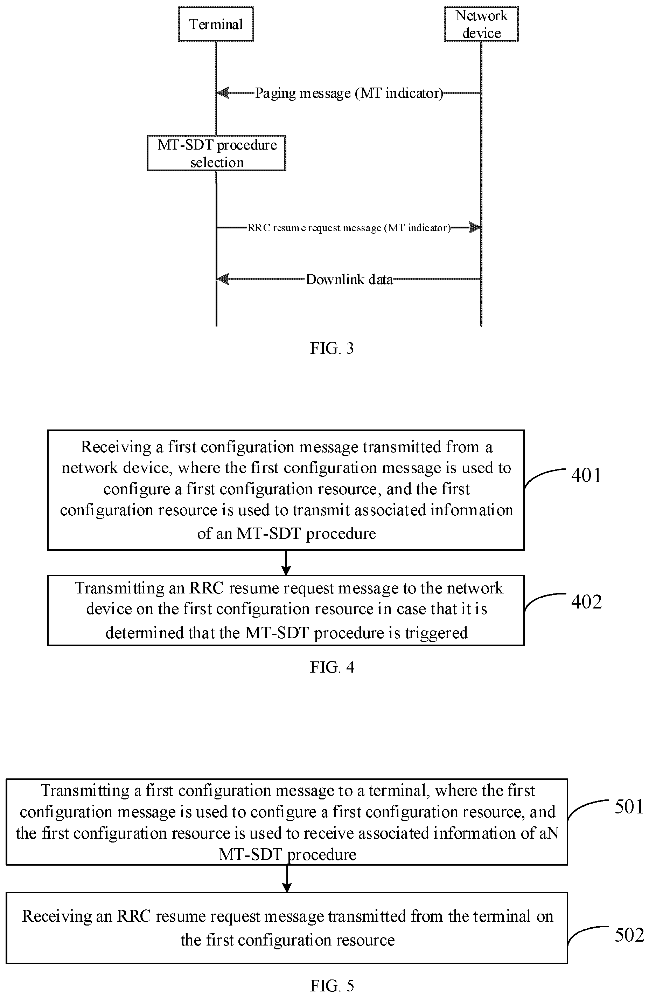

FIG. 3 is a schematic flowchart of an MT-SDT procedure according to an embodiment of the present application. As shown in FIG. 3, the MT-SDT procedure includes at least the following steps.

Step A: in case that a network side generates small data and determines to use the MT-SDT procedure for transmission, the network side transmits a paging message to UE, which carries MT indication information indicating that this is an MT-SDT procedure.

Step B: the terminal selects a corresponding SDT procedure and transmits an RRC resume request message to the network device, which carries the MT indication information. The SDT procedure includes small data transmission based on CG resource, as well as small data transmission based on two-step random access, and small data transmission based on four-step random access.

Step C: after receiving the RRC resume request message, the network device starts configuring the associated bearer entities and transmits downlink small data to the terminal.

After the MT-SDT procedure is introduced, the UE needs to notify the network device that it is the MT-SDT procedure that is triggered at the terminal side. If the MO-SDT procedure is fully reused, and associated signaling is transmitted on the CG resources or random access resources corresponding to the MO-SDT procedure, it occupies a large amount of time-frequency resources due to the resources configured by the network side for the transmission of uplink small data in the MO-SDT procedure. For the MT-SDT procedure, in case that the resources corresponding to the MO-SDT procedure are fully reused, there is a waste of resources.

In response to the above-mentioned problems in the related art, embodiments of the present application provide methods and apparatuses for small data transmission, a terminal, a network device, and a storage medium.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions provided in the embodiments of the present application may be applied in various systems, especially a 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative effort belong to the scope of the present application.

In all embodiments of the present application, during data transmission between the terminal and the network in the MT-SDT or MO-SDT procedure, the terminal is in an inactive state or an idle state.

FIG. 4 is a first schematic flowchart of a method for small data transmission according to an embodiment of the present application. As shown in FIG. 4, the method is performed by a terminal, and the method includes at least the following steps.

Step 401: receiving a first configuration message transmitted from a network device, where the first configuration message is used to configure a first configuration resource, and the first configuration resource is used to transmit associated information of a mobile terminate small data transmission (MT-SDT) procedure.

In an embodiment, the terminal receives the first configuration message transmitted from the network, where the first configuration message is used to configure the first configuration resource, and the first configuration resource is used by the terminal to transmit associated information of the MT-SDT procedure.

The first configuration message, such as RRC release message or broadcast system message, is used by the terminal to determine the first configuration resource for transmitting associated information of the MT-SDT procedure configured by the network device based on the RRC release message or broadcast system message.

Step 402: transmitting a radio resource control (RRC) resume request message to the network device on the first configuration resource in case that it is determined that the MT-SDT procedure is triggered.

In an embodiment, the terminal determines that the network side triggers an MT-SDT procedure, and transmits an RRC resume request message to the network device on the first configuration resource. The RRC resume request message is used to request the network device to resume the MT-SDT associated radio bearers.

The terminal determines that the network side triggers an MT-SDT procedure, which may be determined based on an MT indicator carried in a paging message transmitted from the network device.

In the method for small data transmission provided in the embodiments of the present application, the terminal determines the first configuration resource for transmitting associated information of the MT-SDT procedure based on the first configuration message transmitted from the network device. In case that it is determined that the MT-SDT procedure is triggered by the network side, the terminal transmits an RRC resume request message to the network device on the first configuration resource, which clarifies the resource configuration method for MT-SDT procedure, and reduces resource waste.

In an embodiment, the first configuration resource includes a configured grant (CG) resource, or a random access resource.

In an embodiment, the first configuration resource may be classified into a CG resource or a random access resource based on resource types. The random access resource includes random access channel occasion (RACH occasion, RO) resources for two-step random access and four-step random access, or scrambling code resources in the random access preamble.

For CG resources, the terminal directly transmits the RRC resume request message on the CG resources indicated by the network side. For random access resources, the terminal transmits a preamble on the RO resource or scrambling code resource indicated by the network side. After receiving the preamble, the network side feeds back a random access response to the terminal, which indicates an uplink grant (UL grant). The terminal transmits the RRC resume request message and SDT data on the indicated UL grant.

In an embodiment, the first configuration resource is the same as part of resources for transmitting associated information of a mobile original small data transmission (MO-SDT) procedure configured by the network device; or,
the first configuration message includes first indication information, where the first indication information is used to indicate to reuse part of resources for transmitting associated information of an MO-SDT procedure configured by the network device; or,
the first configuration resource is a shared resource, where the shared resource is shared with resources for transmitting associated information of an MO-SDT procedure configured by the network device.

In an embodiment, the first configuration resource for transmitting associated information of the MT-SDT procedure configured by the network device may be part of resources for transmitting associated information of the MO-SDT procedure configured by the network device. For ease of description, the resources for transmitting associated information of the MO-SDT procedure configured by the network device are referred to as the second configuration resources.

As the data of MT-SDT is smaller than the data of MO-SDT, the first configuration resource may be part of the resources in the second configuration resource, and the part of the resources may be shared by the MO-SDT procedure and the MT-SDT procedure, or may be dedicated for the MT-SDT procedure.

In an embodiment, the network device configures the first configuration resource to be part of the resources in the second configuration resource; or, the first configuration message may carry the first indication information, which indicates the terminal to reuse the second configuration resource configured by the network device; or, the first configuration resource is a shared resource, that is, resources are shared between the associated information of the MT-SDT procedure and the associated information of the MO-SDT procedure.

In the method for small data transmission provided in the embodiments of the present application, the network device configures the first configuration resource for transmitting associated information of the MT-SDT procedure as part of resources for transmitting associated information of the MO-SDT procedure, which reduces network resource overhead.

In an embodiment, in case that the first configuration resource is a shared resource, transmitting the RRC resume request message to the network device includes:
transmitting the RRC resume request message and a first indicator to the network device, where the first indicator is used to indicate that the first configuration resource is being used for the MT-SDT procedure; or
transmitting the RRC resume request message and second indication information to the network device, where the second indication information is used to indicate that the first configuration resource is being used for the MT-SDT procedure.

It should be noted that the second indication information here has the same meaning as the first indicator recorded in the former.

In an embodiment, in case that the first configuration resource for transmitting associated information of the MT-SDT procedure configured by the network device is a shared resource, the terminal transmits an RRC resume request message to the network side, where the RRC resume request message carries the first indicator indicating that the first resource is being used for the MT-SDT procedure.

In case that the first configuration resource is a shared resource, the terminal needs to clarify whether the first configuration resource is being used for the MO-SDT procedure or the MT-SDT procedure through MO indicator or MT indicator during signaling transmission to avoid resource transmission conflicts.

In the RRC resume request message, the first indicator may be an MT resume cause, indicating that the RRC resume request message is used to request the network device to resume the associated radio bearers of MT-SDT.

In the method for small data transmission provided in the embodiments of the present application, in case that the first configuration resource is a shared resource, MT indicator and MO indicator are used to distinguish the actual usage of the first configuration resource, which avoids resource transmission conflicts caused by shared resources.

In an embodiment, the first configuration message carries index information of part of configured grant (CG) resources for transmitting associated information of the MO-SDT procedure configured by the network device, or proportion information of part of random access resources for transmitting associated information of the MO-SDT procedure configured by the network device.

In an embodiment, in case that the first configuration resource is part of the second configuration resources for transmitting associated information of the MO-SDT procedure configured by the network device, the first configuration message may also carry index information of part of CG resources in the second configuration resource to clarify which part of the CG resources corresponding to the MO-SDT procedure are used for the associated information of the MT-SDT procedure.

Or, the first configuration message may carry the proportion information of part of random access resources in the second configuration resource to clarify which part of resources corresponding to the MO-SDT procedure are the random access resources used in the MT-SDT procedure. In an embodiment, in addition to clarifying the proportion information, specific (such as the lowest or highest) frequency domain resources or scrambling code identifiers may also be clarified.

In the method for small data transmission provided in the embodiments of the present application, in case that the first configuration resource is part of resources for transmitting associated information of the MO-SDT procedure configured by the network device, information of available resources for the MT-SDT procedure is further clarified through the index information of CG resources or the proportion information of random access resources, which reduces the resource overhead of the network.

In an embodiment, the first configuration resource is the CG resource, and the first configuration message includes at least one or more of the following: time domain information of the CG resource; frequency domain information of the CG resource; a first payload size threshold of the CG resource; or a first channel threshold of the CG resource.

In an embodiment, the first configuration resource for transmitting associated information of the MT-SDT procedure configured by the network device may also be, in addition to part of resources for transmitting associated information of the MO-SDT procedure configured by the network device, a resource for the MT-SDT procedure newly configured by the network device, and the newly configured resource may be a CG resource. If the newly configured resource is a CG resource, the network side needs to configure specific information of the CG resource. The first configuration message includes at least one or more of the following.
(1) Time domain information of the CG resource. The time domain information of the CG resource is, such as, time offset information, cycle information, etc.
(2) A frequency domain resource of the CG resource.
(3) A first payload size threshold of the CG resource. Since the CG resource is periodic resource, the CG resource is limited by the payload size threshold. Only when the data packet does not exceed the first payload threshold size, may CG resources be used for SDT transmission.
(4) A first channel threshold of the CG resource. When it is below the first channel threshold, it indicates that the distance between the terminal and the network device is too large, and the speed of SDT transmission is affected.

In an embodiment, a time domain location of the CG resource is determined based on a paging occasion and time offset information in the time domain information, and/or a cycle in the time domain information of the CG resource meets a given relationship with a paging cycle corresponding to a terminal in an inactive state.

In an embodiment, a time domain location of the CG resource is determined based on a paging occasion and time offset information in the time domain information of the CG resource, and/or cycle information of the CG resource meets a given relationship with a paging cycle corresponding to a terminal in an inactive state.

In other words, the cycle information of the CG resource in the time domain meets a given relationship with the paging cycle corresponding to a terminal in an inactive state.

In an embodiment, the time domain location of the CG resource is determined based on the paging occasion (PO) of the terminal in the inactive state and the time offset information in the time domain information. For example, the time domain location of the CG resource may start from the paging occasion of the terminal in the inactive state, with a length equal to the time offset value in the time domain information of CG resource. For example, a starting position of CG resources is after the paging occasion, with a length equal to the time offset value.

In an embodiment, the starting position of CG resources is N slots and/or M subframe after the paging message.

The cycle in the time domain information of the CG resource meets the given relationship with the paging cycle corresponding to a terminal in an inactive state. For example, the cycle of CG resources and the paging cycle corresponding to the terminal in the inactive state are a certain multiple, or the cycle of CG resources is 1/N of the paging cycle corresponding to the terminal in the inactive state, where N is a positive integer.

For example, the cycle of CG resources is the paging cycle during which a terminal in an inactive state performs paging monitoring. For example, the cycle of CG resources is a minimum value of a paging cycle of a core network of a terminal and a paging cycle of a radio access network. The paging cycle is measured in radio frames.

In an embodiment, the first payload size threshold is smaller than a second payload size threshold of a CG resource for transmitting associated information of the MO-SDT procedure configured by the network device; or,
the first payload size threshold is a percentage value of a second payload size threshold of a CG resource for transmitting associated information of the MO-SDT procedure configured by the network device; or,
the first payload size threshold is independent from a second payload size threshold of a CG resource for transmitting associated information of the MO-SDT procedure configured by the network device.

In an embodiment, the payload size threshold of the CG resource for transmitting associated information of the MT-SDT procedure configured by the network device is referred to as the first payload size threshold, and the payload size threshold of the CG resource for transmitting associated information of the MO-SDT procedure configured by the network device is referred to as the second payload size threshold.

The first load size threshold may be configured to be smaller than the second load size threshold; or, the first load size threshold may be configured as a percentage of the second load size threshold, such as M %, where M is a positive number less than 100; or, the first load size threshold is an independent value configured by the network side and has no relationship with the second load size threshold.

In an embodiment, the first channel threshold is equal to a second channel threshold of a CG resource for transmitting associated information of the MO-SDT procedure configured by the network device.

In an embodiment, the channel threshold of the CG resource for transmitting associated information of the MT-SDT procedure configured by the network device is referred to as the first channel threshold, and the channel threshold of the CG resource for transmitting associated information of the MO-SDT procedure configured by the network device is referred to as the second channel threshold.

The first channel threshold may be configured to be the same as the second channel threshold; the first channel threshold may also be an independent value configured by the network side, without any correlation with the second channel threshold.

In an embodiment, a timing advance timer for the CG resource is the same as a timing advance timer for a CG resource for transmitting associated information of the MO-SDT procedure configured by the network device, and a channel change threshold of the CG resource is the same as a channel change threshold of the CG resource for transmitting associated information of the MO-SDT procedure configured by the network device; or,
the CG resource and a CG resource for transmitting associated information of the MO-SDT procedure configured by the network device share a timing advance timer and a channel change threshold;
the timing advance timer and the channel change threshold are used to determine validity of a timing advance.

In an embodiment, for the CG resource for transmitting associated information of the MT-SDT procedure configured by the network device and the CG resource for transmitting associated information of the MO-SDT procedure configured by the network device, their timing advance timer and channel change threshold may be configured as a same value, or the CG resource for transmitting associated information of the MT-SDT procedure configured by the network device and the CG resource for transmitting associated information of the MO-SDT procedure configured by the network device may share a same timing advance timer and channel change threshold. One of the conditions for the validity of CG resources is that the channel change of the terminal is less than the channel change threshold and the timing advance timer is still running.

The validity of timing advance is ensured by timing advance timer and channel change threshold. In case that the timing advance timer expires, it indicates that the timing advance is invalid and CG resources are no longer available; in case that the channel change threshold exceeds, it indicates that the distance between the terminal and the network device has changed significantly, the previous timing advance is no longer applicable, and CG resources are no longer available.

In an embodiment, the first configuration resource is the random access resource, and the first configuration message includes at least one or more of the following: a resource for random access channel occasion; a scrambling code resource for random access channel occasion; priority information between the MT-SDT procedure and a mobile original small data transmission (MO-SDT) procedure; or priority information between the MT-SDT procedure and other features supported by network.

In an embodiment, the first configuration resource for transmitting associated information of the MT-SDT procedure configured by the network device may also be, in addition to part of resources for transmitting associated information of the MO-SDT procedure configured by the network device, a resource for the MT-SDT procedure newly configured by the network device, and the newly configured resource may be a random access resource. If the newly configured resource is a random access resource, the network side needs to configure specific information of the random access resource. The first configuration message includes at least one or more of the following.
(1) A resource for random access channel occasion.
(2) A scrambling code resource for random access channel occasion.
(3) Priority information between the MT-SDT procedure and the MO-SDT procedure. When there are both MO-SDT transmission and MT-SDT transmission, it is necessary to clarify the priority between the two to avoid data transmission conflicts.
(4) Priority information between the MT-SDT procedure and other features supported by network. The priority between the MT-SDT procedure and other features or a combination of the features supported by network such as slicing, reduced capability, and coverage enhancement needs to be clarified to avoid service conflicts.

For example, the priority of MO-SDT is configured to be higher than the priority of MT-SDT. For example, the priority of MO-SDT and other feature combinations is configured to be higher than the priority of MT-SDT and other feature combination.

In the method for small data transmission provided in the embodiments of the present application, the dedicated CG resources or random access resources for the MT-SDT procedure are newly configured, which avoids resource waste caused by completely reusing MO-SDT resources.

In an embodiment, before transmitting the RRC resume request message, the method further includes:
determining mobile original non-small data transmission, and prioritizing to initiate a random access procedure for the mobile original non-small data transmission; or,
determining there is an MO-SDT data transmission, and prioritizing to perform the MO-SDT procedure.

In an embodiment, for the MT-SDT procedure, it is necessary to clarify the priority of this procedure and the MO-SDT procedure, as well as the priority of this procedure and the mobile original non-small data transmission procedure.

Before transmitting the RRC resume request message, in case that it is determined that there is mobile original non-small data transmission, the terminal prioritizes initiating the random access procedure of mobile original non-small data transmission; or, in case that it is determined that there is MO-SDT data transmission, the MO-SDT procedure is prioritized.

Before transmitting the RRC resume request message means that it may be before transmitting MsgA or Msg1 (i.e., before transmitting the scrambling code in the preamble), or before transmitting the SDT data in Msg3, or after receiving the paging message transmitted from the network side. The priority of MO-SDT procedure and the priority of mobile original non-small data transmission are both higher than the priority of MT-SDT procedure.

In the method for small data transmission provided in the embodiments of the present application, the priorities between the MO-SDT procedure, the mobile original non-small data transmission, and the MT-SDT procedure are clarified to avoid resource transmission conflicts.

FIG. 5 is second schematic flowchart of a method for small data transmission according to an embodiment of the present application. As shown in FIG. 5, the method is performed by a network device, such as a base station, etc. The method at least includes the following steps.

Step 501: transmitting a first configuration message to a terminal, where the first configuration message is used to configure a first configuration resource, and the first configuration resource is used to receive associated information of a mobile terminate small data transmission (MT-SDT) procedure.

In an embodiment, the network device transmits a first configuration message to the terminal, which is used to configure the first configuration resource. The first configuration resource is used by the network device to receive associated information of the MT-SDT procedure.

The first configuration message is, such as, an RRC release message or a broadcast system message.

Step 502: receiving a radio resource control (RRC) resume request message transmitted from the terminal on the first configuration resource.

In an embodiment, when generating small data and determining to use the MT-SDT procedure to transmit the small data, the network device transmits a paging message carrying an MT indicator to the terminal. After determining that the MT-SDT procedure is triggered, the terminal responds to the paging message from the network device. The network device receives the RRC resume request message transmitted from the terminal on the first configuration resource, and resumes the radio bearers associated with the MT-SDT procedure.

In the method for small data transmission provided in the embodiments of the present application, the network device configures the first configuration resource for transmitting associated information of the MT-SDT procedure to the terminal through the first configuration message, and after the network device initiates a paging message for MT-SDT, the network device may receive the RRC resume request message transmitted from the terminal on the first configuration resource, which clarifies the resource configuration method for MT-SDT procedure, and reduces resource waste.

In an embodiment, the first configuration resource includes a configured grant (CG) resource, or a random access resource.

In an embodiment, the first configuration resource may be classified into a CG resource or a random access resource based on resource types. The random access resource includes random access channel occasion (RACH occasion, RO) resources for two-step random access and four-step random access, or scrambling code resources in the random access preamble.

For CG resources, the network device receives the RRC resume request message on the indicated CG resource. For random access resources, the network device receives the preamble transmitted from the terminal on the indicated RO resource or scrambling code resource. After receiving the preamble, the network side feeds back a random access response to the terminal, which dedicates the uplink grant (UL grant). The network device receives the RRC resume request message and SDT data on the dedicated UL grant.

In an embodiment, the first configuration resource is the same as part of resources for transmitting associated information of a mobile original small data transmission (MO-SDT) procedure configured by the network device; or,
the first configuration message includes first indication information, where the first indication information is used to indicate to reuse part of resources for transmitting associated information of the MO-SDT procedure configured by the network device; or,
the first configuration resource is a shared resource, where the shared resource is shared with resources for transmitting associated information of the MO-SDT procedure configured by the network device.

In an embodiment, the network device configures the first configuration resource for transmitting associated information of the MT-SDT procedure as part of resources for transmitting associated information of the MO-SDT procedure. For ease of description, the resources for transmitting associated information of the MO-SDT procedure configured by the network device are referred to as the second configuration resources.

As the data of MT-SDT is smaller than the data of MO-SDT, the first configuration resource may be part of the resources in the second configuration resource, and the part of the resources may be shared by the MO-SDT procedure and the MT-SDT procedure, or may be dedicated for the MT-SDT procedure.

In an embodiment, the network device configures the first configuration resource to be part of the resources in the second configuration resource; or, the first configuration message may carry the first indication information, which indicates the terminal to reuse the second configuration resource configured by the network device; or, the first configuration resource is a shared resource, that is, resources are shared between the associated information of the MT-SDT procedure and the associated information of the MO-SDT procedure.

In the method for small data transmission provided in the embodiments of the present application, the network device configures the first configuration resource for transmitting associated information of the MT-SDT procedure as part of resources for transmitting associated information of the MO-SDT procedure, which reduces network resource overhead.

In an embodiment, in case that the first configuration resource is a shared resource, the method further includes:
receiving a first indicator transmitted from the terminal, where the first indicator is used to indicate that the first configuration resource is being used for the MT-SDT procedure.

In an embodiment, in case that the first configuration resource for transmitting associated information of the MT-SDT procedure configured by the network device is a shared resource, the network side may receive not only the RRC resume request message transmitted from the terminal, but also the first indicator transmitted from the terminal, where the first indicator is used to indicate that the first resource is being used for the MT-SDT procedure.

In case that the first configuration resource is a shared resource, the terminal needs to clarify whether the first configuration resource is being used for the MO-SDT procedure or the MT-SDT procedure through MO indicator or MT indicator during signaling transmission to avoid resource transmission conflicts.

In the RRC resume request message, the first indicator may be an MT resume cause, indicating that the RRC resume request message is used to request the network device to resume the associated radio bearers of MT-SDT.

In the method for small data transmission provided in the embodiments of the present application, in case that the first configuration resource is a shared resource, MT indicator and MO indicator are used to distinguish the actual usage of the first configuration resource, which avoids resource transmission conflicts caused by shared resources.

In an embodiment, the first configuration message carries index information of part of configured grant (CG) resources for transmitting associated information of the MO-SDT procedure configured by the network device, or proportion information of part of random access resources for transmitting associated information of the MO-SDT procedure configured by the network device.

In an embodiment, in case that the first configuration resource is part of the second configuration resources for transmitting associated information of the MO-SDT procedure configured by the network device, the first configuration message may also carry index information of part of CG resources in the second configuration resource to clarify which part of the CG resources corresponding to the MO-SDT procedure are used for the associated information of the MT-SDT procedure.

Or, the first configuration message may carry the proportion information of part of random access resources in the second configuration resource to clarify which part of resources corresponding to the MO-SDT procedure are the random access resources used in the MT-SDT procedure. In an embodiment, in addition to clarifying the proportion information, specific (such as the lowest or highest) frequency domain resources or scrambling code identifiers may also be clarified.

In the method for small data transmission provided in the embodiments of the present application, in case that the first configuration resource is part of resources for transmitting associated information of the MO-SDT procedure configured by the network device, information of available resources for the MT-SDT procedure is further clarified through the index information of CG resources or the proportion information of random access resources, which reduces the resource overhead of the network.

In an embodiment, the first configuration resource is the CG resource, and the first configuration message includes at least one or more of the following: time domain information of the CG resource; frequency domain information of the CG resource; a first payload size threshold of the CG resource; or a first channel threshold of the CG resource.

In an embodiment, the first configuration resource for transmitting associated information of the MT-SDT procedure configured by the network device may also be, in addition to part of resources for transmitting associated information of the MO-SDT procedure configured by the network device, a resource for the MT-SDT procedure newly configured by the network device, and the newly configured resource may be a CG resource. If the newly configured resource is a CG resource, the network side needs to configure specific information of the CG resource. The first configuration message includes at least one or more of the following.
(1) Time domain information of the CG resource. The time domain information of the CG resource is, such as, time offset information, cycle information, etc.
(2) A frequency domain resource of the CG resource.
(3) A first payload size threshold of the CG resource. Since the CG resource is periodic resource, the CG resource is limited by the payload size threshold. Only when the data packet does not exceed the first payload threshold size, may CG resources be used for SDT transmission.
(4) A first channel threshold of the CG resource. When it is below the first channel threshold, it indicates that the distance between the terminal and the network device is too large, and the speed of SDT transmission is affected.

In an embodiment, a time domain location of the CG resource is determined based on paging occasion and time offset information in the time domain information, or a cycle in the time domain information of the CG resource meets a given relationship with a paging cycle corresponding to a terminal in an inactive state.

In an embodiment, the time domain location of the CG resource is jointly determined based on the paging occasion of the terminal in the inactive state and the time offset information in the time domain information. For example, the time domain location of the CG resource may start from the paging occasion of the terminal in the inactive state, with a length equal to the time offset value in the time domain information of CG resource. For example, a starting position of CG resources is after the paging occasion, with a length equal to the time offset value.

In an embodiment, the starting position of CG resources is N slots and/or M subframe after the paging message.

The cycle in the time domain information of the CG resource meets the given relationship with the paging cycle corresponding to a terminal in an inactive state. For example, the cycle of CG resources and the paging cycle corresponding to the terminal in the inactive state are a certain multiple, or the cycle of CG resources is 1/N of the paging cycle corresponding to the terminal in the inactive state, where N is a positive integer.

For example, the cycle of CG resources is the paging cycle during which a terminal in an inactive state performs paging monitoring. For example, the cycle of CG resources is a minimum value of a paging cycle of a core network of a terminal and a paging cycle of a radio access network. The paging cycle is measured in radio frames.

In an embodiment, the first payload size threshold is smaller than a second payload size threshold of a CG resource for transmitting associated information of the MO-SDT procedure configured by the network device; or,
the first payload size threshold is a percentage value of a second payload size threshold of a CG resource for transmitting associated information of the MO-SDT procedure configured by the network device; or,
the first payload size threshold is independent from a second payload size threshold of a CG resource for transmitting associated information of the MO-SDT procedure configured by the network device.

In an embodiment, the payload size threshold of the CG resource for transmitting associated information of the MT-SDT procedure configured by the network device is referred to as the first payload size threshold, and the payload size threshold of the CG resource for transmitting associated information of the MO-SDT procedure configured by the network device is referred to as the second payload size threshold.

The first load size threshold may be configured to be smaller than the second load size threshold; or, the first load size threshold may be configured as a percentage of the second load size threshold, such as M %, where M is a positive number less than 100; or, the first load size threshold is an independent value configured by the network side and has no relationship with the second load size threshold.

In an embodiment, the first channel threshold is equal to a second channel threshold of a CG resource for transmitting associated information of the MO-SDT procedure configured by the network device.

In an embodiment, the channel threshold of the CG resource for transmitting associated information of the MT-SDT procedure configured by the network device is referred to as the first channel threshold, and the channel threshold of the CG resource for transmitting associated information of the MO-SDT procedure configured by the network device is referred to as the second channel threshold.

The first channel threshold may be configured to be the same as the second channel threshold; the first channel threshold may also be an independent value configured by the network side, without any correlation with the second channel threshold.

In an embodiment, a timing advance timer for the CG resource is the same as a timing advance timer for a CG resource for transmitting associated information of the MO-SDT procedure configured by the network device, and a channel change threshold of the CG resource is the same as a channel change threshold of the CG resource for transmitting associated information of the MO-SDT procedure configured by the network device; or,
the CG resource and a CG resource for transmitting associated information of the MO-SDT procedure configured by the network device share a timing advance timer and a channel change threshold;
the timing advance timer and the channel change threshold are used to determine validity of a timing advance.

In an embodiment, for the CG resource for transmitting associated information of the MT-SDT procedure configured by the network device and the CG resource for transmitting associated information of the MO-SDT procedure configured by the network device, their timing advance timer and channel change threshold may be configured as a same value, or the CG resource for transmitting associated information of the MT-SDT procedure configured by the network device and the CG resource for transmitting associated information of the MO-SDT procedure configured by the network device may share a same timing advance timer and channel change threshold. One of the conditions for the validity of CG resources is that the channel change of the terminal is less than the channel change threshold and the timing advance timer is still running.

The validity of timing advance is ensured by timing advance timer and channel change threshold. In case that the timing advance timer expires, it indicates that the timing advance is invalid and CG resources are no longer available; in case that the channel change threshold exceeds, it indicates that the distance between the terminal and the network device has changed significantly, the previous timing advance is no longer applicable, and CG resources are no longer available.

In an embodiment, the first configuration resource is the random access resource, and the first configuration message includes at least one or more of the following: a resource for random access channel occasion; a scrambling code resource for random access channel occasion; priority information between the MT-SDT procedure and a mobile original small data transmission (MO-SDT) procedure; or priority information between the MT-SDT procedure and other features supported by network.

In an embodiment, the first configuration resource for transmitting associated information of the MT-SDT procedure configured by the network device may also be, in addition to part of resources for transmitting associated information of the MO-SDT procedure configured by the network device, a resource for the MT-SDT procedure newly configured by the network device, and the newly configured resource may be a random access resource. If the newly configured resource is a random access resource, the network side needs to configure specific information of the random access resource. The first configuration message includes at least one or more of the following.
(1) A resource for random access channel occasion.
(2) A scrambling code resource for random access channel occasion.
(3) Priority information between the MT-SDT procedure and the MO-SDT procedure. When there are both MO-SDT transmission and MT-SDT transmission, it is necessary to clarify the priority between the two to avoid data transmission conflicts.
(4) Priority information between the MT-SDT procedure and other features supported by network. The priority between the MT-SDT procedure and other features or a combination of the features supported by network such as slicing, reduced capability, and coverage enhancement needs to be clarified to avoid service conflicts.

For example, the priority of MO-SDT is configured to be higher than the priority of MT-SDT. For example, the priority of MO-SDT and other feature combinations is configured to be higher than the priority of MT-SDT and other feature combination.

In the method for small data transmission provided in the embodiments of the present application, the dedicated CG resources or random access resources for the MT-SDT procedure are newly configured, which avoids resource waste caused by completely reusing MO-SDT resources.

Below are several examples to further introduce the solutions of the embodiments of the present application.

### Example 1

Embodiments of the present application provide a method for small data transmission, in which a CG resource for MT-SDT is configured on the network side, and the terminal uses the CG resource to transmit an RRC message of MT-SDT. The method includes the following steps.

Step A: a network device configures a CG resource for MT-SDT, including:
(1) selecting part of resources configured for MO-SDT for MT-SDT and configuring a dedicated first payload size threshold for MT-SDT; in case that an initial uplink data packet of MT-SDT is below the first payload size threshold, using a corresponding CG resource for MT-SDT transmission;
(2) or, newly configuring a dedicated CG resource for MT-SDT, with specific time domain information and frequency domain information configured for the CG resource; the time domain information includes cycle information and a time offset value, and a cycle of the CG resource is configured as a certain multiple of a paging cycle of a terminal in an inactive state. The time domain location of the CG resource starts at a paging occasion of the terminal in the inactive state, and lasts for a time offset value.

Step B: the terminal obtains the paging message carrying MT indicator transmitted from the network device, and determines to take CG-SDT to transmit the RRC resume request message for a common control channel (CCCH) after autonomous selection.

In an embodiment, any CG resource in step A may be used to transmit the RRC resume request message.

Step C: after transmitting the RRC resume request message on the CG resource, the terminal receives downlink data information feedback from the network side.

Since the CG resources of MO-SDT and MT-SDT are both uplink transmission resources, they may share a timing advance timer and channel change threshold associated with the validity of timing advance.

Or, when the CG resources associated with MT-SDT are configured first, MO-SDT may reuse the timing advance timer and channel change threshold of MT-SDT.

The timing advance timer of CG-SDT may be restarted every time the timing advance corresponding to CG-SDT (including MO-SDT and MT-SDT) is updated.

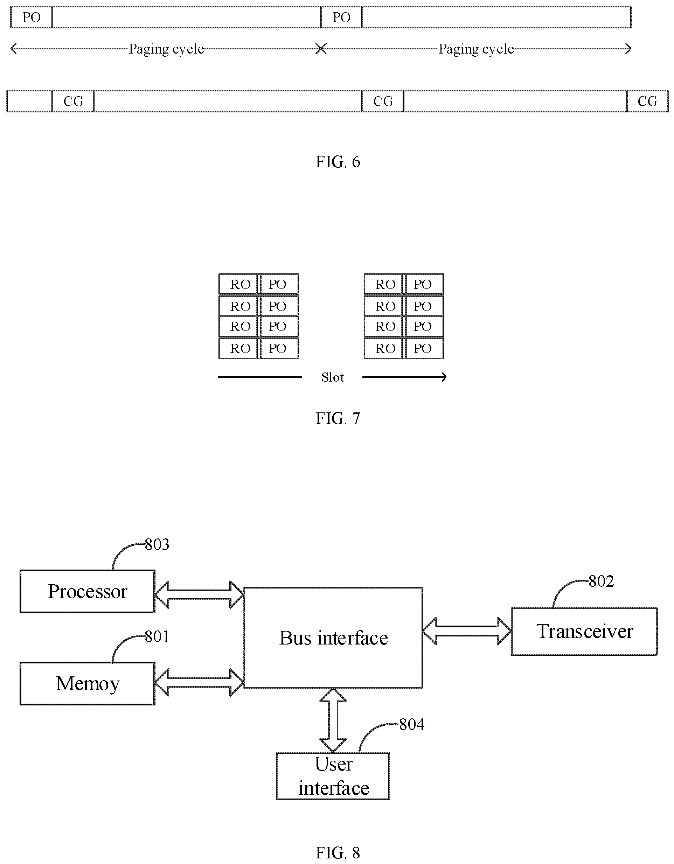

Step D: after receiving the RRC resume request message, the network device determines that the terminal initiates the MT-SDT procedure, and the network device transmits downlink data information. FIG. 6 is a schematic diagram of a time domain location of a CG resource according to an embodiment of the present application. As shown in FIG. 6, the cycle of a CG resource is proportional to the paging cycle of a terminal in an inactive state, and the starting position of the CG resource is after the paging occasion, which is beneficial for the terminal to initiate the MT-SDT procedure with valid CG resources from a delay perspective after obtaining the paging message.

Correspondingly, the time domain cycle and time offset value of the CG resource is configured by the network, and the cycle is a certain multiple of the paging cycle of the terminal in the inactive state.

### Example 2

Embodiments of the present application provide a method for small data transmission, in which a random access resource for MT-SDT is configured on the network side. The method includes the following steps.

Step A: the network device uses a broadcast system message or dedicated signaling to configure a random access resource for MT-SDT, which includes at least one of the following: an RO resource; a scrambling code resource; priority information between the MT-SDT procedure and the MO-SDT procedure; or priority information between the MT-SDT procedure and other features supported by network.

If MT-SDT shares part of RO resources of MO-SDT, the proportion information of some RO resources is indicated by *msgA-SSB-SharedRO-MaskIndex.*

If MT-SDT shares part of scrambling code resources of MO-SDT, corresponding scrambling code identifier or index information and quantity information are provided.

Step B: after obtaining the paging message carrying the MT indicator, the terminal autonomously chooses to use the RA-SDT (including two-step random access or four-step random access) to transmit the RRC resume request message for CCCH. According to the configuration information on the network side, the terminal selects the RO resource or scrambling code resource corresponding to MT-SDT to transmit the scrambling code in the preamble corresponding to MT-SDT.

Step C: the terminal transmits an RRC resume request message using the UL grant of MsgA or Msg3.

Step D: after receiving the RRC resume request message, the network device determines that the UE initiates the MT-SDT procedure, and the network device transmits downlink data information. FIG. 7 is a schematic diagram of a random access resource according to an embodiment of the present application. As shown in FIG. 7, for four-step random access and two-step random access, the terminal may use a legacy random access procedure to trigger the MT-SDT procedure and carry the MT indicator in the RRC resume request message. The network side receives the MT indicator carried in the RRC resume request message. The network verifies the identification information of the terminal based on the paging message of MT-SDT and identifies the downlink data transmitted using MT-SDT.

The terminal re-establishes a packet data convergence protocol (PDCP) entity associated with SDT bearers before transmitting the RRC resume request message, completing the initialization of SDT.

If the terminal detects a mobile original non-small data transmission before transmitting data of the scrambling code, MsgA, or Msg3, the RRC resume request message carries the indication information of the mobile original non-small data transmission (in an embodiment, an RRC resume request message carrying the MO indicator is transmitted on the uplink resource corresponding to MT-SDT), and the network switches the terminal to a connected state to perform data transmission.

If the terminal detects MO-SDT data transmission before transmitting the scrambling code, or before transmitting the RRC resume request message, or after receiving the paging message, the MO-SDT procedure is used to trigger data transmission, with MO-SDT having higher priority than MT-SDT.

For CG MT-SDT, the terminal may use the legacy CG resource of the MO-SDT to trigger the MT-SDT procedure and carry the MT indicator in the RRC resume request message. After obtaining the MT indicator carried in the RRC resume request message, the network side uses the MT-SDT to transmit downlink data. The terminal re-establishes all PDCP entities of SDT and completes the initialization of SDT before transmitting the RRC resume request message. If the terminal detects a mobile original non-small data transmission before transmitting the RRC resume request message, the RRC resume request message carries the indication information of the mobile original non-small data transmission (in an embodiment, an RRC resume request message carrying the MO indicator is transmitted on the uplink resource corresponding to MT-SDT), and the network switches the terminal to a connected state to perform data transmission. If MO-SDT data transmission is detected before transmitting the RRC resume request message, the UE uses the MO-SDT procedure to trigger the data transmission. MO-SDT has a higher priority than MT-SDT.

For CG MT-SDT, in case that a mobile original non-small data transmission is detected before the UE transmits an RRC resume request message, the legacy random access procedure for non-small data transmission is used. The MO indicator is carried in the RRC resume request message, and the network switches the UE to a connected state to perform data transmission.

In the method for small data transmission provided in the embodiments of the present application, for the MT-SDT procedure, the resource allocation under the use of part of MO-SDT resources, and the resource configuration of newly configured MT-SDT resources are clarified, which effectively reduces the resource overhead of the network.

FIG. 8 is a schematic structural diagram of a terminal according to an embodiment of the present application. As shown in FIG. 8, the terminal includes a memory 801, a transceiver 802, and a processor 803, where:
the memory 801 is used for storing a computer program; the transceiver 802 is used for transmitting and receiving data under control of the processor 803.

In an embodiment, the transceiver 802 is used for transmitting and receiving data under control of the processor 803.

In FIG. 8, a bus architecture may include any number of interconnected buses and bridges, which are linked together through various circuits of one or more processors represented by the processor 803 and one or more memories represented by the memory 801. The bus architecture may also link together various other circuits, such as peripherals, voltage regulators, and power management circuits, etc., which are well known in the art, and therefore are not further described in the present application. The bus interface provides an interface. The transceiver 802 may include multiple elements, i.e., including a transmitter and a receiver, units for providing communication with various other devices over transmission media including wireless channels, wired channels, fiber optic cables, and the like. For different user devices, the user interface 804 may also be an interface that may connect external and internal devices, including but not limited to keypads, displays, speakers, microphones, joysticks, etc.

The processor 803 is responsible for managing the bus architecture and general processing, and the memory 801 may store data used by the processor 803 when performing operations.

In an embodiment, processor 803 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to perform any of the methods performed by the terminal provided in the embodiments of the present application based on the obtained executable instructions. The processor and the memory may also be arranged physically separately.

The processor 803 is used for reading the computer program in the memory 801 and performing the following operations:
receiving a first configuration message transmitted from a network device, where the first configuration message is used to configure a first configuration resource, and the first configuration resource is used to transmit associated information of a mobile terminate small data transmission (MT-SDT) procedure; and
transmitting a radio resource control (RRC) resume request message to the network device on the first configuration resource in case that it is determined that the MT-SDT procedure is triggered.

In an embodiment, the first configuration resource includes a configured grant (CG) resource, or a random access resource.

In an embodiment, the first configuration resource is the same as part of resources for transmitting associated information of a mobile original small data transmission (MO-SDT) procedure configured by the network device; or,
the first configuration message includes first indication information, where the first indication information is used to indicate to reuse part of resources for transmitting associated information of the MO-SDT procedure configured by the network device; or,
the first configuration resource is a shared resource, where the shared resource is shared with resources for transmitting associated information of the MO-SDT procedure configured by the network device.

In an embodiment, in case that the first configuration resource is the shared resource, transmitting the RRC resume request message to the network device includes:
transmitting the RRC resume request message and a first indicator to the network device, where the first indicator is used to indicate that the first configuration resource is being used for the MT-SDT procedure.

In an embodiment, the first configuration message carries index information of part of configured grant (CG) resources for transmitting associated information of the MO-SDT procedure configured by the network device, or proportion information of part of random access resources for transmitting associated information of the MO-SDT procedure configured by the network device.

In an embodiment, the first configuration resource is the CG resource, and the first configuration message includes at least one or more of the following: time domain information of the CG resource; frequency domain information of the CG resource; a first payload size threshold of the CG resource; or a first channel threshold of the CG resource.

In an embodiment, a time domain location of the CG resource is determined based on paging occasion and time offset information in the time domain information, or a cycle in the time domain information of the CG resource meets a given relationship with a paging cycle corresponding to a terminal in an inactive state.

In an embodiment, the first payload size threshold is smaller than a second payload size threshold of a CG resource for transmitting associated information of the MO-SDT procedure configured by the network device; or,
the first payload size threshold is a percentage value of a second payload size threshold of a CG resource for transmitting associated information of the MO-SDT procedure configured by the network device; or,
the first payload size threshold is independent from a second payload size threshold of a CG resource for transmitting associated information of the MO-SDT procedure configured by the network device.

In an embodiment, the first channel threshold is equal to a second channel threshold of a CG resource for transmitting associated information of the MO-SDT procedure configured by the network device.

In an embodiment, a timing advance timer for the CG resource is the same as a timing advance timer for a CG resource for transmitting associated information of the MO-SDT procedure configured by the network device, and a channel change threshold of the CG resource is the same as a channel change threshold of the CG resource for transmitting associated information of the MO-SDT procedure configured by the network device; or,
the CG resource and a CG resource for transmitting associated information of the MO-SDT procedure configured by the network device share a timing advance timer and a channel change threshold;
the timing advance timer and the channel change threshold are used to determine validity of a timing advance.

In an embodiment, the first configuration resource is the random access resource, and the first configuration message includes at least one or more of the following: a resource for random access channel occasion; a scrambling code resource for random access channel occasion; priority information between the MT-SDT procedure and a mobile original small data transmission (MO-SDT) procedure; or priority information between the MT-SDT procedure and other features supported by network.

In an embodiment, the processor 803 is used for reading the computer program in the memory 801 and performing the following operations:
before transmitting the RRC resume request message:
determining that there is a mobile original non-small data transmission, and prioritizing to initiate a random access procedure for the mobile original non-small data transmission; or,
determining that there is a mobile original small data transmission (MO-SDT), and prioritizing to perform an MO-SDT procedure.

It should be noted that the terminal provided in the embodiments of the present application may implement all the method steps implemented by the method embodiment performed by a terminal, and may achieve the same technical effects. The same parts and beneficial effects as the method embodiment in this embodiment are not repeated.

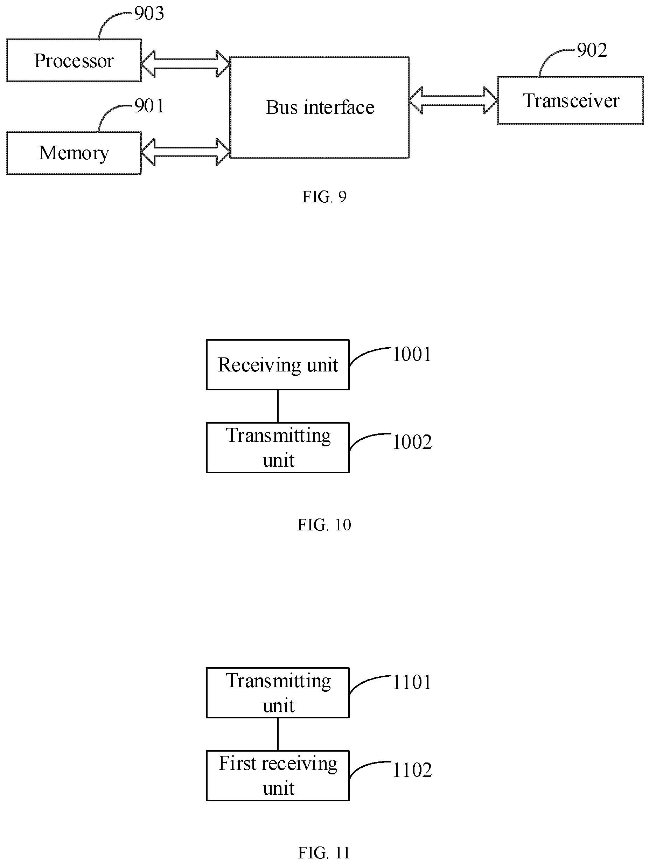

FIG. 9 is a schematic structural diagram of a network device according to an embodiment of the present application. As shown in FIG. 9, the network device includes a memory 901, a transceiver 902, and a processor 903, where:
the memory 901 is used for storing a computer program; the transceiver 902 is used for transmitting and receiving data under control of the processor 903.

In an embodiment, the transceiver 902 is used for transmitting and receiving data under control of the processor 903.

In FIG. 9, a bus architecture may include any number of interconnected buses and bridges, which are linked together through various circuits of one or more processors represented by the processor 903 and one or more memories represented by the memory 901. The bus architecture may also link various other circuits such as peripheral devices, voltage regulators, and power management circuits together, which are well-known in the art, and therefore are not further described in the present application. The bus interface provides an interface. The transceiver 902 may include multiple elements, i.e., including a transmitter and a receiver, units for providing communication with various other devices over transmission media including wireless channels, wired channels, fiber optic cables, and the like. The processor 903 is responsible for managing the bus architecture and general processing, and the memory 901 may store data used by the processor 903 when performing operations.

The processor 903 may be a central processing unit (CPU), an application specific integrated circuit (ASIC), a field-programmable gate array (FPGA), or a complex programmable logic device (CPLD), the processor may also use a multi-core architecture.

The processor 903 is used for reading the computer program in the memory 901 and performing the following operations:
transmitting a first configuration message to a terminal, where the first configuration message is used to configure a first configuration resource, and the first configuration resource is used to receive associated information of a mobile terminate small data transmission (MT-SDT) procedure; and
receiving a radio resource control (RRC) resume request message transmitted from the terminal on the first configuration resource in case that it is determined that the MT-SDT procedure is triggered.

In an embodiment, the first configuration resource includes a configured grant (CG) resource, or a random access resource.

In an embodiment, the first configuration resource is the same as part of resources for transmitting associated information of a mobile original small data transmission (MO-SDT) procedure configured by a network device; or,
the first configuration message includes first indication information, where the first indication information is used to indicate to reuse part of resources for transmitting associated information of the MO-SDT procedure configured by the network device; or,
the first configuration resource is a shared resource, where the shared resource is shared with resources for transmitting associated information of the MO-SDT procedure configured by the network device.

In an embodiment, in case that the first configuration resource is the shared resource, the processor 903 is used for reading the computer program in the memory 901 and performing the following operations:
receiving a first indicator transmitted from the terminal, where the first indicator is used to indicate that the first configuration resource is being used for the MT-SDT procedure.

In an embodiment, the first configuration message carries index information of part of configured grant (CG) resources for transmitting associated information of the MO-SDT procedure configured by the network device, or proportion information of part of random access resources for transmitting associated information of the MO-SDT procedure configured by the network device.

In an embodiment, the first configuration resource is the CG resource, and the first configuration message includes at least one or more of the following: time domain information of the CG resource; frequency domain information of the CG resource; a first payload size threshold of the CG resource; or a first channel threshold of the CG resource.

In an embodiment, a time domain location of the CG resource is determined based on paging occasion and time offset information in the time domain information, or a cycle in the time domain information of the CG resource meets a given relationship with a paging cycle corresponding to a terminal in an inactive state.

In an embodiment, the first payload size threshold is smaller than a second payload size threshold of a CG resource for transmitting associated information of the MO-SDT procedure configured by the network device; or,
the first payload size threshold is a percentage value of a second payload size threshold of a CG resource for transmitting associated information of the MO-SDT procedure configured by the network device; or,
the first payload size threshold is independent from a second payload size threshold of a CG resource for transmitting associated information of the MO-SDT procedure configured by the network device.

In an embodiment, the first channel threshold is equal to a second channel threshold of a CG resource for transmitting associated information of the MO-SDT procedure configured by the network device.

In an embodiment, a timing advance timer for the CG resource is the same as a timing advance timer for a CG resource for transmitting associated information of the MO-SDT procedure configured by the network device, and a channel change threshold of the CG resource is the same as a channel change threshold of the CG resource for transmitting associated information of the MO-SDT procedure configured by the network device; or,
the CG resource and a CG resource for transmitting associated information of the MO-SDT procedure configured by the network device share a timing advance timer and a channel change threshold;
the timing advance timer and the channel change threshold are used to determine validity of a timing advance.

In an embodiment, the first configuration resource is the random access resource, and the first configuration message includes at least one or more of the following: a resource for random access channel occasion; a scrambling code resource for random access channel occasion; priority information between the MT-SDT procedure and a mobile original small data transmission (MO-SDT) procedure; or priority information between the MT-SDT procedure and other features supported by network.

It should be noted that the above-mentioned network device provided in the embodiments of the present application may achieve all the method steps implemented by the method embodiment performed by a network device, and may achieve the same technical effects. The same parts and beneficial effects as the method embodiment in this embodiment are not repeated.

FIG. 10 is a first schematic structural diagram of an apparatus for small data transmission according to an embodiment of the present application. As shown in FIG. 10, the apparatus at least includes:
a receiving unit 1001, used for receiving a first configuration message transmitted from a network device, where the first configuration message is used to configure a first configuration resource, and the first configuration resource is used to transmit associated information of a mobile terminate small data transmission (MT-SDT) procedure; and
a transmitting unit 1002, used for transmitting a radio resource control (RRC) resume request message to the network device on the first configuration resource in case that it is determined that the MT-SDT procedure is triggered.

In an embodiment, the first configuration resource includes a configured grant (CG) resource, or a random access resource.

In an embodiment, the first configuration resource is the same as part of resources for transmitting associated information of a mobile original small data transmission (MO-SDT) procedure configured by the network device; or,
the first configuration message includes first indication information, where the first indication information is used to indicate to reuse part of resources for transmitting associated information of the MO-SDT procedure configured by the network device; or,
the first configuration resource is a shared resource, where the shared resource is shared with resources for transmitting associated information of the MO-SDT procedure configured by the network device.

In an embodiment, in case that the first configuration resource is the shared resource, the transmitting unit 1002 is used for:
transmitting the RRC resume request message and a first indicator to the network device, where the first indicator is used to indicate that the first configuration resource is being used for the MT-SDT procedure.

In an embodiment, the first configuration message carries index information of part of configured grant (CG) resources for transmitting associated information of the MO-SDT procedure configured by the network device, or proportion information of part of random access resources for transmitting associated information of the MO-SDT procedure configured by the network device.

In an embodiment, the first configuration resource is the CG resource, and the first configuration message includes at least one or more of the following: time domain information of the CG resource; frequency domain information of the CG resource; a first payload size threshold of the CG resource; or a first channel threshold of the CG resource.

In an embodiment, a time domain location of the CG resource is determined based on paging occasion and time offset information in the time domain information, or a cycle in the time domain information of the CG resource meets a given relationship with a paging cycle corresponding to a terminal in an inactive state.

In an embodiment, the first payload size threshold is smaller than a second payload size threshold of a CG resource for transmitting associated information of the MO-SDT procedure configured by the network device; or,
the first payload size threshold is a percentage value of a second payload size threshold of a CG resource for transmitting associated information of the MO-SDT procedure configured by the network device; or,
the first payload size threshold is independent from a second payload size threshold of a CG resource for transmitting associated information of the MO-SDT procedure configured by the network device.

In an embodiment, the first channel threshold is equal to a second channel threshold of a CG resource for transmitting associated information of the MO-SDT procedure configured by the network device.

In an embodiment, a timing advance timer for the CG resource is the same as a timing advance timer for a CG resource for transmitting associated information of the MO-SDT procedure configured by the network device, and a channel change threshold of the CG resource is the same as a channel change threshold of the CG resource for transmitting associated information of the MO-SDT procedure configured by the network device; or,
the CG resource and a CG resource for transmitting associated information of the MO-SDT procedure configured by the network device share a timing advance timer and a channel change threshold;
the timing advance timer and the channel change threshold are used to determine validity of a timing advance.

In an embodiment, the first configuration resource is the random access resource, and the first configuration message includes at least one or more of the following: a resource for random access channel occasion; a scrambling code resource for random access channel occasion; priority information between the MT-SDT procedure and a mobile original small data transmission (MO-SDT) procedure; or priority information between the MT-SDT procedure and other features supported by network.

In an embodiment, the apparatus further includes a determining module, used for:
before transmitting the RRC resume request message:
determining that there is a mobile original non-small data transmission, and prioritizing to initiate a random access procedure for the mobile original non-small data transmission; or,
determining that there is a mobile original small data transmission (MO-SDT), and prioritizing to perform an MO-SDT procedure.

FIG. 11 is a second schematic structural diagram of an apparatus for small data transmission according to an embodiment of the present application. As shown in FIG. 11, the apparatus at least includes:
a transmitting unit 1101, used for transmitting a first configuration message to a terminal, where the first configuration message is used to configure a first configuration resource, and the first configuration resource is used to receive associated information of a mobile terminate small data transmission (MT-SDT) procedure; and
a first receiving unit 1102, used for receiving a radio resource control (RRC) resume request message transmitted from the terminal on the first configuration resource in case that it is determined that the MT-SDT procedure is triggered.

In an embodiment, the first configuration resource includes a configured grant (CG) resource, or a random access resource.

In an embodiment, the first configuration resource is the same as part of resources for transmitting associated information of a mobile original small data transmission (MO-SDT) procedure configured by a network device; or,
the first configuration message includes first indication information, where the first indication information is used to indicate to reuse part of resources for transmitting associated information of the MO-SDT procedure configured by the network device; or,
the first configuration resource is a shared resource, where the shared resource is shared with resources for transmitting associated information of the MO-SDT procedure configured by the network device.

In an embodiment, in case that the first configuration resource is the shared resource, the apparatus further includes:
a second receiving unit, used for receiving a first indicator transmitted from the terminal, where the first indicator is used to indicate that the first configuration resource is being used for the MT-SDT procedure.

In an embodiment, the first configuration message carries index information of part of configured grant (CG) resources for transmitting associated information of the MO-SDT procedure configured by the network device, or proportion information of part of random access resources for transmitting associated information of the MO-SDT procedure configured by the network device.

In an embodiment, the first configuration resource is the CG resource, and the first configuration message includes at least one or more of the following: time domain information of the CG resource; frequency domain information of the CG resource; a first payload size threshold of the CG resource; or a first channel threshold of the CG resource.

In an embodiment, a time domain location of the CG resource is determined based on paging occasion and time offset information in the time domain information, or a cycle in the time domain information of the CG resource meets a given relationship with a paging cycle corresponding to a terminal in an inactive state.

In an embodiment, the first payload size threshold is smaller than a second payload size threshold of a CG resource for transmitting associated information of the MO-SDT procedure configured by the network device; or,
the first payload size threshold is a percentage value of a second payload size threshold of a CG resource for transmitting associated information of the MO-SDT procedure configured by the network device; or,
the first payload size threshold is independent from a second payload size threshold of a CG resource for transmitting associated information of the MO-SDT procedure configured by the network device.

In an embodiment, the first channel threshold is equal to a second channel threshold of a CG resource for transmitting associated information of the MO-SDT procedure configured by the network device.

In an embodiment, a timing advance timer for the CG resource is the same as a timing advance timer for a CG resource for transmitting associated information of the MO-SDT procedure configured by the network device, and a channel change threshold of the CG resource is the same as a channel change threshold of the CG resource for transmitting associated information of the MO-SDT procedure configured by the network device; or,
the CG resource and a CG resource for transmitting associated information of the MO-SDT procedure configured by the network device share a timing advance timer and a channel change threshold;
the timing advance timer and the channel change threshold are used to determine validity of a timing advance.

In an embodiment, the first configuration resource is the random access resource, and the first configuration message includes at least one or more of the following: a resource for random access channel occasion; a scrambling code resource for random access channel occasion; priority information between the MT-SDT procedure and a mobile original small data transmission (MO-SDT) procedure; or priority information between the MT-SDT procedure and other features supported by network.

The methods and apparatuses provided in each embodiment of the present application are based on the same application concept. As the principles of problem-solving by the methods and apparatuses are similar, the implementation of the apparatuses and methods may be referred to each other, which are not repeated.

It should be noted that the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

In case that the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a USB flash disk, a mobile hard disk, a read-only memory (ROM), a random access memory (RAM), a magnetic disk, or a compact disk.

It should be noted that the above-mentioned apparatuses provided in the embodiments of the present application may achieve all the method steps implemented in the above-mentioned method embodiments, and may achieve the same technical effects. Therefore, specific descriptions of the same parts and beneficial effects as the method embodiment in this embodiment are not repeated here.

The embodiments of the present application further provide a processor-readable storage medium, which stores a computer program for causing a processor to perform the method for small data transmissions provided in the above embodiments, for example, including:
receiving a first configuration message transmitted from a network device, where the first configuration message is used to configure a first configuration resource, and the first configuration resource is used to transmit associated information of a mobile terminate small data transmission (MT-SDT) procedure; and transmitting a radio resource control (RRC) resume request message to the network device on the first configuration resource in case that it is determined that the MT-SDT procedure is triggered;
   or,
transmitting a first configuration message to a terminal, where the first configuration message is used to configure a first configuration resource, and the first configuration resource is used to receive associated information of a mobile terminate small data transmission (MT-SDT) procedure; and receiving a radio resource control (RRC) resume request message transmitted from the terminal on the first configuration resource in case that it is determined that the MT-SDT procedure is triggered.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

Those skilled in the art understands that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer-usable storage media (including but not limited to disk storage and optical storage) containing computer-usable program codes.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for small data transmission, comprising:
receiving a first configuration message transmitted from a network device, wherein the first configuration message is used to configure a first configuration resource, and the first configuration resource is used to transmit associated information of a mobile terminate small data transmission (MT-SDT) procedure; and
transmitting a radio resource control (RRC) resume request message to the network device on the first configuration resource in case that it is determined that the MT-SDT procedure is triggered.

2. The method for small data transmission of claim 1, wherein the first configuration resource comprises a configured grant (CG) resource, or a random access resource.

3. The method for small data transmission of claim 1, wherein
the first configuration resource is the same as part of resources for transmitting associated information of a mobile original small data transmission (MO-SDT) procedure configured by the network device; or
the first configuration message comprises first indication information, wherein the first indication information is used to indicate to reuse part of resources for transmitting associated information of a mobile original small data transmission (MO-SDT) procedure configured by the network device; or
the first configuration resource is a shared resource, wherein the shared resource is shared with resources for transmitting associated information of a mobile original small data transmission (MO-SDT) procedure configured by the network device.

4. The method for small data transmission of claim 3, wherein in case that the first configuration resource is a shared resource, transmitting the RRC resume request message to the network device comprises:
transmitting the RRC resume request message and second indication information to the network device, wherein the second indication information is used to indicate that the first configuration resource is being used for the MT-SDT procedure.

5. The method for small data transmission of claim 3, wherein the first configuration message carries index information of part of configured grant (CG) resources for transmitting associated information of the MO-SDT procedure configured by the network device, or proportion information of part of random access resources for transmitting associated information of the MO-SDT procedure configured by the network device.

6. The method for small data transmission of claim 2, wherein the first configuration resource is the CG resource, and the first configuration message comprises at least one or more of the following:
time domain information of the CG resource;
frequency domain information of the CG resource;
a first payload size threshold of the CG resource; or
a first channel threshold of the CG resource.

7. The method for small data transmission of claim 6, wherein a time domain location of the CG resource is determined based on a paging occasion and time offset information in the time domain information of the CG resource, and/or a cycle of the CG resource in the time domain meets a given relationship with a paging cycle corresponding to a terminal in an inactive state.

8. The method for small data transmission of claim 6, wherein
the first payload size threshold is smaller than a second payload size threshold of a CG resource for transmitting associated information of a mobile original small data transmission (MO-SDT) procedure configured by the network device; or
the first payload size threshold is a percentage value of a second payload size threshold of a CG resource for transmitting associated information of a mobile original small data transmission (MO-SDT) procedure configured by the network device; or
the first payload size threshold is independent from a second payload size threshold of a CG resource for transmitting associated information of a mobile original small data transmission (MO-SDT) procedure configured by the network device.

9. The method for small data transmission of claim 6, wherein the first channel threshold is equal to a second channel threshold of a CG resource for transmitting associated information of a mobile original small data transmission (MO-SDT) procedure configured by the network device.

10. The method for small data transmission of claim 6, wherein
a timing advance timer for the CG resource is the same as a timing advance timer for a CG resource for transmitting associated information of a mobile original small data transmission (MO-SDT) procedure configured by the network device, and a channel change threshold of the CG resource is the same as a channel change threshold of the CG resource for transmitting associated information of a mobile original small data transmission (MO-SDT) procedure configured by the network device; or,
the CG resource and a CG resource for transmitting associated information of a mobile original small data transmission (MO-SDT) procedure configured by the network device share a timing advance timer and a channel change threshold;
the timing advance timer and the channel change threshold are used to determine validity of a timing advance.

11. The method for small data transmission of claim 2, wherein the first configuration resource is the random access resource, and the first configuration message comprises at least one or more of the following:
a resource for random access channel occasion;
a scrambling code resource for random access channel occasion;
priority information between the MT-SDT procedure and a mobile original small data transmission (MO-SDT) procedure; or
priority information between the MT-SDT procedure and other features supported by network.

12. The method for small data transmission of claim 1, wherein before transmitting the RRC resume request message, the method further comprises:
determining that there is a mobile original non-small data transmission, and prioritizing to initiate a random access procedure for the mobile original non-small data transmission; or
determining that there is a mobile original small data transmission (MO-SDT), and prioritizing to perform an MO-SDT procedure.

13. A method for small data transmission, comprising:
transmitting a first configuration message to a terminal, wherein the first configuration message is used to configure a first configuration resource, and the first configuration resource is used to receive associated information of a mobile terminate small data transmission (MT-SDT) procedure; and
receiving a radio resource control (RRC) resume request message transmitted from the terminal on the first configuration resource.

14. The method for small data transmission of claim 13, wherein
the first configuration resource is the same as part of resources for transmitting associated information of a mobile original small data transmission (MO-SDT) procedure configured by a network device; or
the first configuration message comprises first indication information, wherein the first indication information is used to indicate to reuse part of resources for transmitting associated information of a mobile original small data transmission (MO-SDT) procedure configured by a network device; or
the first configuration resource is a shared resource, wherein the shared resource is shared with resources for transmitting associated information of a mobile original small data transmission (MO-SDT) procedure configured by a network device.

15. The method for small data transmission of claim 14, wherein in case that the first configuration resource is a shared resource, the method further comprises:
receiving second indication information transmitted from the terminal, wherein the second indication information is used to indicate that the first configuration resource is being used for the MT-SDT procedure.

16. A terminal, comprising a memory, a transceiver, and a processor, wherein
the memory is used for storing a computer program; the transceiver is used for receiving and transmitting data under control of the processor; and the processor is used for reading the computer program in the memory and performing the following operations:
receiving a first configuration message transmitted from a network device, wherein the first configuration message is used to configure a first configuration resource, and the first configuration resource is used to transmit associated information of a mobile terminate small data transmission (MT-SDT) procedure; and
transmitting a radio resource control (RRC) resume request message to the network device on the first configuration resource in case that it is determined that the MT-SDT procedure is triggered.

17. The terminal of claim 16, wherein the first configuration resource comprises a configured grant (CG) resource, or a random access resource.

18. The terminal of claim 16, wherein
the first configuration resource is the same as part of resources for transmitting associated information of a mobile original small data transmission (MO-SDT) procedure configured by the network device; or
the first configuration message comprises first indication information, wherein the first indication information is used to indicate to reuse part of resources for transmitting associated information of a mobile original small data transmission (MO-SDT) procedure configured by the network device; or
the first configuration resource is a shared resource, wherein the shared resource is shared with resources for transmitting associated information of a mobile original small data transmission (MO-SDT) procedure configured by the network device.

19. The terminal of claim 18, wherein in case that the first configuration resource is a shared resource, transmitting the RRC resume request message to the network device comprises:
transmitting the RRC resume request message and second indication information to the network device, wherein the second indication information is used to indicate that the first configuration resource is being used for the MT-SDT procedure.

20. The terminal of claim 18, wherein the first configuration message carries index information of part of configured grant (CG) resources for transmitting associated information of the MO-SDT procedure configured by the network device, or proportion information of part of random access resources for transmitting associated information of the MO-SDT procedure configured by the network device.

21. The terminal of claim 17, wherein the first configuration resource is the CG resource, and the first configuration message comprises at least one or more of the following:
time domain information of the CG resource;
frequency domain information of the CG resource;
a first payload size threshold of the CG resource; or
a first channel threshold of the CG resource.

22. The terminal of claim 21, wherein a time domain location of the CG resource is determined based on a paging occasion and time offset information in the time domain information of the CG resource, and/or a cycle of the CG resource in the time domain meets a given relationship with a paging cycle corresponding to a terminal in an inactive state.

23. The terminal of claim 21, wherein
the first payload size threshold is smaller than a second payload size threshold of a CG resource for transmitting associated information of a mobile original small data transmission (MO-SDT) procedure configured by the network device; or
the first payload size threshold is a percentage value of a second payload size threshold of a CG resource for transmitting associated information of a mobile original small data transmission (MO-SDT) procedure configured by the network device; or
the first payload size threshold is independent from a second payload size threshold of a CG resource for transmitting associated information of a mobile original small data transmission (MO-SDT) procedure configured by the network device.

24. The terminal of claim 21, wherein the first channel threshold is equal to a second channel threshold of a CG resource for transmitting associated information of a mobile original small data transmission (MO-SDT) procedure configured by the network device.

25. The terminal of claim 21, wherein
a timing advance timer for the CG resource is the same as a timing advance timer for a CG resource for transmitting associated information of a mobile original small data transmission (MO-SDT) procedure configured by the network device, and a channel change threshold of the CG resource is the same as a channel change threshold of the CG resource for transmitting associated information of a mobile original small data transmission (MO-SDT) procedure configured by the network device; or
the CG resource and a CG resource for transmitting associated information of a mobile original small data transmission (MO-SDT) procedure configured by the network device share a timing advance timer and a channel change threshold;
the timing advance timer and the channel change threshold are used to determine validity of a timing advance.

26. The terminal of claim 17, wherein the first configuration resource is the random access resource, and the first configuration message comprises at least one or more of the following:
a resource for random access channel occasion;
a scrambling code resource scrambling code resource for random access channel occasion;
priority information between the MT-SDT procedure and a mobile original small data transmission (MO-SDT) procedure; or
priority information between the MT-SDT procedure and other features supported by network.

27. The terminal of claim 16, wherein before transmitting the RRC resume request message, the processor is used for reading the computer program in the memory and performing the following operations:
determining that there is a mobile original non-small data transmission, and prioritizing to initiate a random access procedure for the mobile original non-small data transmission; or
determining that there is a mobile original small data transmission (MO-SDT), and prioritizing to perform an MO-SDT procedure.

28. A network device, comprising a memory, a transceiver, and a processor, wherein
the memory is used for storing a computer program; the transceiver is used for receiving and transmitting data under control of the processor; and the processor is used for reading the computer program in the memory and performing the following operations:
transmitting a first configuration message to a terminal, wherein the first configuration message is used to configure a first configuration resource, and the first configuration resource is used to receive associated information of a mobile terminate small data transmission (MT-SDT) procedure; and
receiving a radio resource control (RRC) resume request message transmitted from the terminal on the first configuration resource.

29. The network device of claim 28, wherein
the first configuration resource is the same as part of resources for transmitting associated information of a mobile original small data transmission (MO-SDT) procedure configured by a network device; or
the first configuration message comprises first indication information, wherein the first indication information is used to indicate to reuse part of resources for transmitting associated information of a mobile original small data transmission (MO-SDT) procedure configured by the network device; or
the first configuration resource is a shared resource, wherein the shared resource is shared with resources for transmitting associated information of a mobile original small data transmission (MO-SDT) procedure configured by the network device.

30. The network device of claim 29, wherein in case that the first configuration resource is the shared resource, the processor is used for reading the computer program in the memory and perform the following operations:
receiving second indication information transmitted from the terminal, wherein the second indication information is used to indicate that the first configuration resource is being used for the MT-SDT procedure.

31. An apparatus for small data transmission, comprising:
a receiving unit, used for receiving a first configuration message transmitted from a network device, wherein the first configuration message is used to configure a first configuration resource, and the first configuration resource is used to transmit associated information of a mobile terminate small data transmission (MT-SDT) procedure; and
a transmitting unit, used for transmitting a radio resource control (RRC) resume request message to the network device on the first configuration resource in case that it is determined that the MT-SDT procedure is triggered.

32. The apparatus for small data transmission of claim 31, wherein the first configuration resource comprises a configured grant (CG) resource, or a random access resource.

33. The apparatus for small data transmission of claim 31, wherein
the first configuration resource is the same as part of resources for transmitting associated information of a mobile original small data transmission (MO-SDT) procedure configured by the network device; or
the first configuration message comprises first indication information, wherein the first indication information is used to indicate to reuse part of resources for transmitting associated information of a mobile original small data transmission (MO-SDT) procedure configured by the network device; or
the first configuration resource is a shared resource, wherein the shared resource is shared with resources for transmitting associated information of a mobile original small data transmission (MO-SDT) procedure configured by the network device.

34. The apparatus for small data transmission of claim 33, wherein in case that the first configuration resource is the shared resource, the transmitting unit is further used for:
transmitting the RRC resume request message and second indication information to the network device, wherein the second indication information is used to indicate that the first configuration resource is being used for the MT-SDT procedure.

35. The apparatus for small data transmission of claim 33, wherein the first configuration message carries index information of part of configured grant (CG) resources for transmitting associated information of the MO-SDT procedure configured by the network device, or proportion information of part of random access resources for transmitting associated information of the MO-SDT procedure configured by the network device.

36. The apparatus for small data transmission of claim 32, wherein the first configuration resource is the CG resource, and the first configuration message comprises at least one or more of the following:
time domain information of the CG resource;
frequency domain information of the CG resource;
a first payload size threshold of the CG resource; or
a first channel threshold of the CG resource.

37. The apparatus for small data transmission of claim 36, wherein a time domain location of the CG resource is determined based on a paging occasion and time offset information in the time domain information of the CG resource, and/or a cycle of the CG resource in the time domain meets a given relationship with a paging cycle corresponding to a terminal in an inactive state.

38. The apparatus for small data transmission of claim 36, wherein
the first payload size threshold is smaller than a second payload size threshold of a CG resource for transmitting associated information of a mobile original small data transmission (MO-SDT) procedure configured by the network device; or
the first payload size threshold is a percentage value of a second payload size threshold of a CG resource for transmitting associated information of a mobile original small data transmission (MO-SDT) procedure configured by the network device; or
the first payload size threshold is independent from a second payload size threshold of a CG resource for transmitting associated information of a mobile original small data transmission (MO-SDT) procedure configured by the network device.

39. The apparatus for small data transmission of claim 36, wherein the first channel threshold is equal to a second channel threshold of a CG resource for transmitting associated information of a mobile original small data transmission (MO-SDT) procedure configured by the network device.

40. The apparatus for small data transmission of claim 36, wherein
a timing advance timer for the CG resource is the same as a timing advance timer for a CG resource for transmitting associated information of a mobile original small data transmission (MO-SDT) procedure configured by the network device, and a channel change threshold of the CG resource is the same as a channel change threshold of the CG resource for transmitting associated information of a mobile original small data transmission (MO-SDT) procedure configured by the network device; or
the CG resource and a CG resource for transmitting associated information of a mobile original small data transmission (MO-SDT) procedure configured by the network device share a timing advance timer and a channel change threshold;
the timing advance timer and the channel change threshold are used to determine validity of a timing advance.

41. The apparatus for small data transmission of claim 32, wherein the first configuration resource is the random access resource, and the first configuration message comprises at least one or more of the following:
a resource for random access channel occasion;
a scrambling code resource for random access channel occasion;
priority information between the MT-SDT procedure and a mobile original small data transmission (MO-SDT) procedure; or
priority information between the MT-SDT procedure and other features supported by network.

42. The apparatus for small data transmission of claim 31, wherein before transmitting the RRC resume request message, the apparatus further comprises:
determining that there is a mobile original non-small data transmission, and prioritizing to initiate a random access procedure for the mobile original non-small data transmission; or
determining that there is a mobile original small data transmission (MO-SDT), and prioritizing to perform an MO-SDT procedure.

43. An apparatus for small data transmission, comprising:
a transmitting unit, used for transmitting a first configuration message to a terminal, wherein the first configuration message is used to configure a first configuration resource, and the first configuration resource is used to receive associated information of a mobile terminate small data transmission (MT-SDT) procedure; and
a first receiving unit, used for receiving a radio resource control (RRC) resume request message transmitted from the terminal on the first configuration resource in case that it is determined that the MT-SDT procedure is triggered.

44. A computer-readable storage medium storing a computer program, wherein the computer program is used for causing a computer to perform any of the methods of claims 1 to 12, or any of the methods of claims 13 to 15.
